# EUROPEAN PATENT SPECIFICATION

(11) **EP 0 415 781 B1**
(45) Date of publication and mention of the grant of the patent: **18.10.1995**
(21) Application number: 90309549.5
(22) Date of filing: 31.08.1990
(51) Int. Cl.: B60N 2/20

(54) **Double lock recliner for automotive seat**
Neigungsverstellvorrichtung mit doppelter Sperrung für Kraftfahrzeugsitze
Dispositif d'inclinaison à double verrouillage pour sièges d'automobiles

(30) Priority: 31.08.1989 JP 102337/89
(43) Date of publication of application: 06.03.1991
(73) Proprietor: FUJI KIKO COMPANY LIMITED, Tokyo (JP)
(72) Inventor: Matsuura, Hiroshi, c/o Fuji Kiko Comp. Limited, Kosai-shi, Shizuoka-ken (JP); Negi, Yoshitaka, c/o Fuji Kiko Comp. Limited, Kosai-shi, Shizuoka-ken (JP)
(74) Representative: Blanco White, Henry Nicholas

(56) References cited:
- FR-A- 2 269 433
- FR-A- 2 606 337
- GB-A- 2 033 467
- GB-A- 2 078 850

## Description

The present invention relates generally to a recliner for adjusting reclining position of a seat back of an automotive seat. More specifically, the invention relates to a double lock recliner which includes a pair of recliner devices at both sides of an automotive seat.

In general, an automotive seat, particularly a front seat, is capable of adjusting tilting angle of a seat back relative to a seat cushion so as to permit adjustment of seating position of the seat occupant. For this purpose, a recliner is provided for permitting pivotal movement of the seat back relative to the seat cushion. Normally, the seat recliner includes a singular recliner device oriented one side of the seat and a pivot device at the other side of the seat. In such construction, since the pivot device has no capability of locking of the seat at the selected reclining position or tilting position of the seat back, distortion or twisting of the seat back can be caused to degrade comfort at the seat.

For improving this, there has been recently proposed so-called double lock recliner which has symmetric recliner devices at both sides of the seat. Because the recliner devices are provided at both sides of the seat, locking at respective recliner device has to be released. As can be naturally appreciated, independent lock releasing operation for respective recliner device should be too cumbersome or troublesome for the seat occupant and thus is preferably avoided. For this purpose, the recently proposed double lock recliner comprises a primary recliner device which incorporates a release structure operable by means of a manually operable release lever for releasing locking, and a auxiliary recliner device at the side opposite to the primary recliner device. In such construction, the auxiliary recliner device is connected to the primary recliner device by means of a rotary lever. The link lever carries a pivotal lever which is connected to an operation lever pivotally mounted on a base plate. The operation lever carries an operation pin associated with an elongated slot formed through the base plate. The operation pin is connected to an actuation lever associated with a locking tooth member.

GB-A-2 078 850, on which the preamble of claim 1 is based, describes such an arrangement.

With this construction, the operational input through the manually operable release lever of the primary recliner device can be transferred through the rotary lever for synchronous operation of the auxiliary recliner device.

On the other hand, in the usual automotive seat, a buckle device for a safety belt is to be provided on one side of the seat. The buckle device is normally provided at inner side (side adjacent the center line of the vehicle) of the seat, where the auxiliary recliner device can be provided. When an auxiliary recliner device is provided at the inner side of the seat, the buckle device can interfere with pivotal movement of the pivotal lever set forth above. To avoid this interference, the base plate has to be large enough to permit installation of the buckle device with the auxiliary recliner device.

It is the object of the present invention to provide a double lock recliner which does not require large space for installation of both of a seat belt buckle device and an auxiliary recliner device.

The invention provides a double lock recliner for an automotive seat, comprising: a first base plate; a second base plate arranged in spaced relationship with said first base plate; a rotary rod interconnecting said first and second base plates, said rotary rod having one end portion adjacent to said first base plate and the opposite end portion adjacent to said second base plate; a first link lever pivotally mounted to said first base plate and having one end portion formed with a first pin and an opposite end portion; a second link lever having one end fixedly connected to said rotary rod at said one end portion thereof for rotation therewith, said second link lever having the opposite end portion formed with a first hole in which is engaged said first pin of said first link lever; a manual release lever pivotally mounted to said first base plate and engaged with said opposite end portion of said first link lever; a first locking member cooperating with said manual release lever for angular movement with said manual release lever; a third link lever having one end fixedly connected to the said opposite end portion of said rotary rod for rotation therewith, said third link lever having its opposite end portion formed with a second hole; a fourth link lever having one end portion pivotally mounted to said second base plate and the opposite end portion formed with a second pin engaged in said second hole; and a second locking member mounted to said second base plate for angular movement with said fourth link lever; characterized in that said first and second holes are elongate in a radial direction and said second pin and said second hole cooperate with each other such that said second pin is allowed to move within said second hole in a circumferential direction with respect to rotation of said third link lever with said rotary rod; and in that the lever lengths of said first and second levers to the said first pin and the lever lengths of the said third and fourth levers to the said second pin are such that when the second pin does not move circumferentially within the second hole rotation of said rotary rod through an angle causes the second locking member to move angularly more than the first locking member does.

The second elongate hole is differentiated in configuration from the first elongate hole so as to permit independent lock operation irrespective of the first recliner device.

The present invention will be understood more fully from the detailed description given herebelow and from the accompanying drawings of the preferred embodiment of the invention, which, however, should not be taken to limit the invention to the specific embodiments, but are for explanation and understanding only.

In the drawings:
Fig. 1 is a side elevation of a primary recliner device of the preferred embodiment of a double lock recliner according to the present invention;
Fig. 2 is a side elevation of a secondary recliner device of the preferred embodiment of the double lock recliner according to the invention;
Fig. 3 is a plan view of the preferred embodiment of the double lock recliner, in which the primary and secondary recliner devices are connected for cooperation by means of a rotary linking rod;
Fig. 4 is an enlarged section of major part of the secondary recliner device of the preferred embodiment of the double lock recliner according to the invention; and
Fig. 5 is a side elevation showing relative motion of the rotary linking rod and an actuation lever in the auxiliary recliner device.

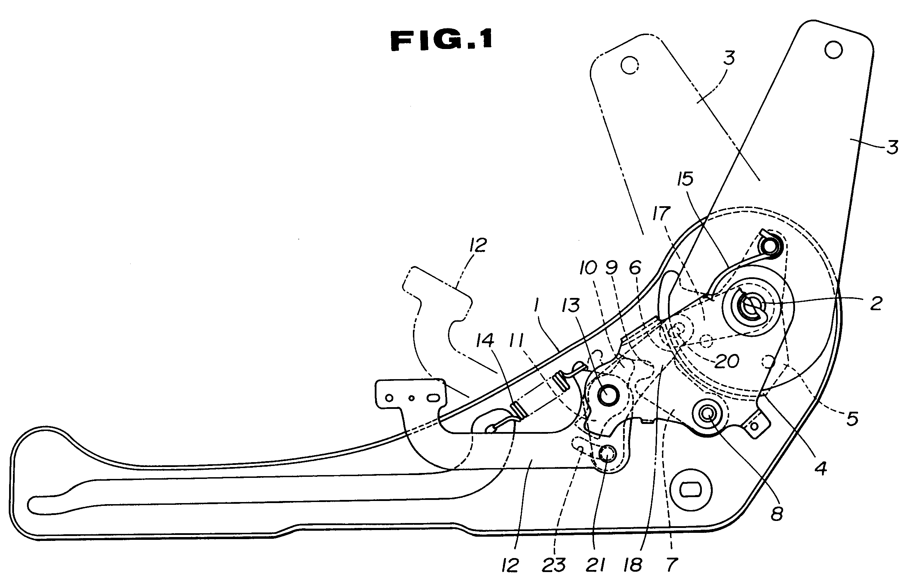

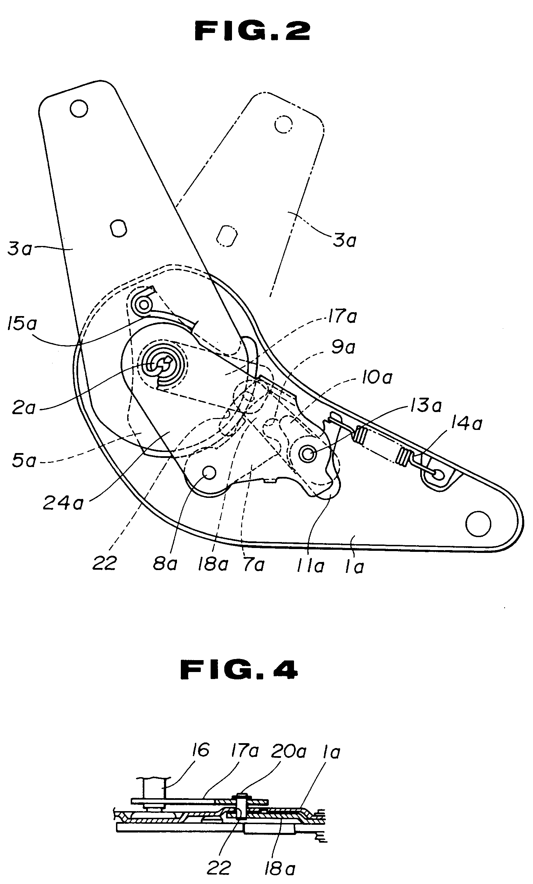

Referring now to the drawings, particularly to Figs. 1 and 2, a primary recliner device is provided outside of an automotive seat, which word "outside of the seat" is used for identification the orientation transversely remote from the center line of the vehicle, and an auxiliary recliner device is provided at inside of the automotive seat, which word "inside of the seat" is used for identification of the orientation transversely close to the center line of the vehicle and thus opposite to the outside. Respective of the primary and the auxiliary recliner devices are provided at rear end positions of the seat.

As shown in Fig. 1, the primary recliner device has a base plate 1. A pivotal arm 3 is rigidly fitted on the outer side portion of a seat back (not shown) of the automotive seat. The pivotal arm 3 is pivotally mounted on a pivot 2. A first tooth member 5 which is formed with a locking teeth 4 in a predetermined angular range, is cooperated with the pivotal arm 3. A second tooth member 7 is pivotably mounted on the base plate 1 for pivotal movement about a pivot 8. The second tooth member 7 is formed with a tooth 6 interengageable with the locking tooth 4 of the first tooth member 5. The second tooth member 7 is formed with a recess 9. The recess 9 is engageable with a locking projection 10 of a locking member 11 which is cooperated with a release lever 12 for cooperation therewith. The release lever 12 is pivotally mounted on the base plate 1 for pivotal movement about a pivot 13. The release lever 12 is resiliently biased in counterclockwise direction in Fig. 1 by means of a bias coil spring 14 which is connected to the base plate 1 at one end and to the release lever at the other end. A spiral spring 15 is provided. The spiral spring 15 has one end engaged with the pivotal arm 3 and the other end engaged with the pivot 2. With this construction, the pivotal arm 3 is biased in counterclockwise direction in Fig. 1 by means of the spiral spring 15.

On the other hand, as shown in Fig. 2, a pivotal arm 3a is rigidly fitted on the inner side portion of the seat back similarly to the pivotal arm 3 set forth above. The pivotal arm 3a is mounted on a base plate 1a via a pivot 2a. The pivotal arm 3a is coupled with a first tooth member 5a for pivotal movement therewith. The first tooth member 5a is engaged with a second tooth member 7a which is pivotably supported on the base plate 1a about a pivot 8a. The second tooth member 7a defines a locking recess 9a which is engagable with a locking projection 10a formed with the locking member 11a which is pivotable about a pivot 13a extended from the base plate 1a. The locking member 11a is resiliently biased in clockwise direction by means of a coil spring 14a for pivotal motion about the pivot 13a. On the other hand, the pivotal arm 3a is biased in by a spiral spring 15a.

As can be seen from Figs. 1 and 2, holder plates 24 and 24a are provided for supporting free ends of respective pivots 2, 8, 13 and 2a, 8a, 13a.

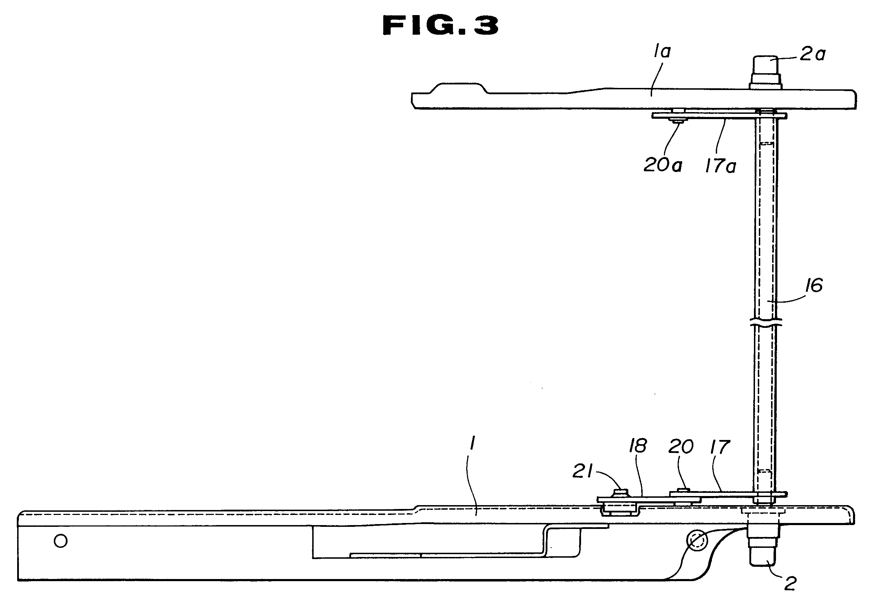

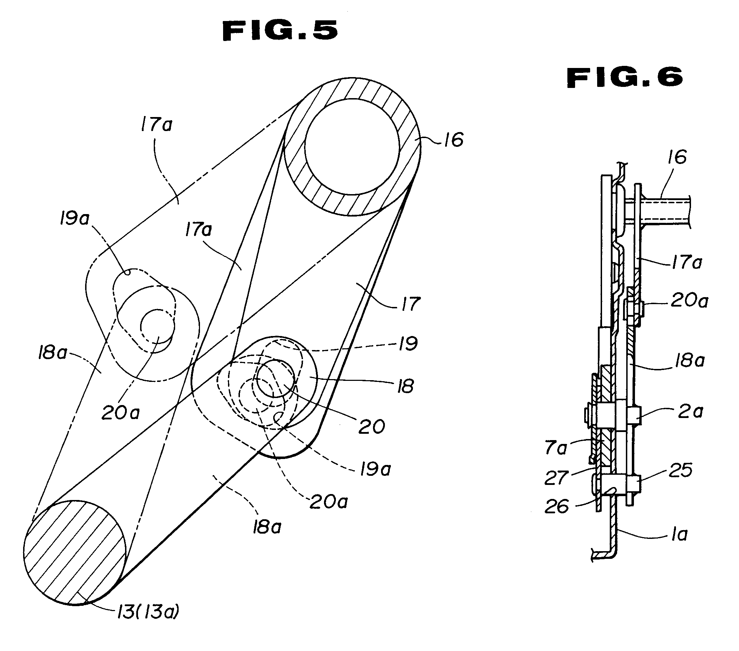

As shown in Fig. 3, the pivots 2 and 2a are connected to one another by means of a rotary linking rod 16. At both ends, the linking rod 16 is connected to a second link lever 17 and a third link lever 17a which has different lever length relative to the second link lever. On the other hand, a first link lever 18 which is of generally crank shaped configuration in plan view, is rigidly secured to the pivot 13 of the release lever 12. The release lever and the first link lever 18 are interconnected to each other via a connecting pin 21 as shown in Fig. 1. The connecting pin 21 extends through an arc-shaped elongated slot 23 defined through the base plate 1. On the other hand, a fourth link lever 18a is oriented on the outside face of the base plate 1a. The fourth link lever 18a is pivotable about the pivot 13a, about which the locking member 11a is pivotally provided, as shown in Fig. 4. Namely, as seen from Fig. 2, a pin 20a extending from the front end of the fourth link lever 18a. The pin 20a extends through an arc shaped slot 22 of Fig. 2. With this construction, even when the seat belt buckle is mounted on the inner face of the base plate 1a, the buckle can not interfere pivotal movement of the fourth link lever 18a. Furthermore, as can be seen, the second link lever 17 is formed at shorter length than the third lever 17a. On the other hand, the fourth link lever 18a is formed with a shorter length than the first link lever 18. The second and third link levers 17 and 17a are rigidly secured to both transverse ends of the linkage rod 16 at mutually identical angular relationship with the linkage rod. The first and second link levers 18 and 20 are cooperated by engaging a the connecting pin 20 extending from the end of the first link lever 18, and an elongated hole 19 formed through the second link lever 17 for cooperative movement with each other. Similarly, the fourth lever 18a has a connecting pin 20a engaging with an elongated hole 19a which is differentiated in configuration from that elongated hole 19 as can be seen from Fig. 5. Namely, in the shown construction, the elongated hole 19a is designed to permit the action of the connecting pin 20a in the same direction to that of the connecting pin 20 when the primary and auxiliary recliner devices are cooperated for synchronous operation. The elongated hole 19a is also designed for permitting action of the connection pin 20a essentially perpendicular to the motion direction of the connecting pin 20 of the primary recliner device. With this construction, the auxiliary recliner device is allowed lock releasing operation independently of the primary recliner device.

With the shown construction, when the release lever 12 is pulled upwardly for causing clockwise rotation in Fig. 1, the connecting pin 21 shifts to cause clockwise pivotal movement of the first link lever 18 about the pivot 13. Since the pin 20 carried by the first link lever 18 is engaged with the elongated hole 19 of the second link lever 17, the second link lever is pivoted in counterclockwise direction at the same time with pivotal movement of the first link lever 18. According to this, the linkage rod 16 is driven to rotate. At the same time, the locking member 11 is driven to rotate in clockwise direction to engagement between the projection 10 of the locking member 11 with the locking recess 9 of the second tooth member 7. By this, the second tooth member 7 is driven to pivot in counterclockwise direction. By this, the engagement between the teeth of the first and second tooth members 5 and 7 can be released. Then, the pivotal arm 3 becomes free from restriction and thus pivotally moved by the spring force of the spiral spring 15 in counterclockwise direction.

According to rotation of the linkage rod 16, the third link lever 17a which is rigidly fixed with the other end of the linkage rod 16 is driven pivotally. According to this, the fourth link lever 18a is pivotally moved about the pivot 13a in counterclockwise direction. By this, the locking member 11a is pivotally moved in counterclockwise direction. By this, the projection 10a of the locking member 11a comes into engagement with the locking recess 9a. Therefore, the second tooth member 7a is driven in clockwise direction about the pivot 8a. Therefore, locking engagement between the first and second tooth members 5a and 7a can be released. Therefore, the pivotal arm 3a becomes free from restriction and thus driven by the spring force of the spiral spring 15a.

In the shown construction, interference of the pivotal motion of the fourth link lever 18a by the seat belt buckle mounted on the base plate will never occur. Therefore, extra space of the base plate required for installation of the seat belt buckle becomes unnecessary.

## Claims

1. A double lock recliner for an automotive seat, comprising: a first base plate (1); a second base plate (1a) arranged in spaced relationship with said first base plate (1); a rotary rod (16) interconnecting said first and second base plates (1, 1a), said rotary rod (16) having one end portion adjacent to said first base plate (1) and the opposite end portion adjacent to said second base plate (1a); a first link lever (18) pivotally mounted to said first base plate (1) and having one end portion formed with a first pin (20) and an opposite end portion; a second link lever (17) having one end fixedly connected to said rotary rod (16) at said one end portion thereof for rotation therewith, said second link lever (17) having the opposite end portion formed with a first hole (19) in which is engaged said first pin (20) of said first link lever (18); a manual release lever (12) pivotally mounted to said first base plate and engaged with said opposite end portion of said first link lever (18); a first locking member (11) cooperating with said manual release lever (12) for angular movement with said manual release lever (12); a third link lever (17a) having one end fixedly connected to the said opposite end portion of said rotary rod (16) for rotation therewith, said third link lever (17a) having its opposite end portion formed with a second hole (19a); a fourth link lever (18a) having one end portion pivotally mounted to said second base plate and the opposite end portion formed with a second pin (20a) engaged in said second hole (19a); and a second locking member (11a) mounted to said second base plate (1a) for angular movement with said fourth link lever (18a); characterized in that said first and second holes (19, 19a) are elongate in a radial direction and said second pin (20a) and said second hole (19a) cooperate with each other such that said second pin (20a) is allowed to move within said second hole (19a) in a circumferential direction with respect to rotation of said third link lever (17a) with said rotary rod (16); and in that the lever lengths of said first (18) and second (17) levers to the said first pin (20) and the lever lengths of the said third (17a) and fourth (18a) levers to the said second pin (20a) are such that when the second pin (20a) does not move circumferentially within the second hole (19a) rotation of said rotary rod (16) through an angle causes the second locking member (11a) to move angularly more than the first locking member (11) does.

2. An automotive seat as claimed in claim 1, wherein the said third link lever (17a) is disposed on that side of said second base plate (1a) which is disposed nearer to the first base plate (1), and said fourth link lever (18a) is disposed on the opposite side of said second base plate (1a), and wherein said second base plate (1a) is formed with an arc-shaped slot (22) through which said second pin (20a) extends.

## Patentansprüche

1. Verstellvorrichtung für einen Kraftfahrzeugsitz mit Zweifach-Feststelleinrichtung, die umfaßt: eine erste Grundplatte (1); eine zweite Grundplatte (1a), die von der ersten Grundplatte (1) beabstandet angeordnet ist; eine Drehstange (16), die die erste und die zweite Grundplatte (1, 1a) miteinander verbindet, wobei ein Endabschnitt der Drehstange (16) an die erste Grundplatte (1) angrenzt, und der gegenüberliegende Endabschnitt an die zweite Grundplatte (1a) angrenzt; einen ersten Verbindungshebel (18), der drehbar an der ersten Grundplatte (1) angebracht ist und einen mit einem ersten Bolzen (20) versehenen Endabschnitt sowie einen gegenüberliegenden Endabschnitt aufweist; einen zweiten Verbindungshebel (17), dessen eines Ende fest mit der Drehstange (16) an dem einen Endabschnitt derselben mit selbiger drehbar verbunden ist, wobei der gegenüberliegende Endabschnitt des zweiten Verbindungshebels (17) mit einem ersten Loch (19) versehen ist, in das der erste Bolzen (20) des ersten Verbindungshebels (18) eingreift; einen Handlösehebel (12), der drehbar an der ersten Grundplatte angebracht ist und mit dem gegenüberliegenden Endabschnitt des ersten Verbindungshebels (18) in Eingriff ist; ein erstes Feststellelement (11), das mit dem Handlösehebel (12) zusammenwirkt und Winkelbewegung mit dem Handlösehebel (12) ausführt; einen dritten Verbindungshebel (17a), dessen eines Ende fest mit dem gegenüberliegenden Endabschnitt der Drehstange (16) mit selbiger drehbar verbunden ist, wobei der gegenüberliegende Endabschnitt des dritten Verbindungshebels (17a) mit einem zweiten Loch (19a) versehen ist; einen vierten Verbindungshebel (18a), dessen einer Endabschnitt drehbar an der zweiten Grundplatte angebracht ist, und dessen gegenüberliegender Endabschnitt mit einem zweiten Bolzen (20a) versehen ist, der in das zweite Loch (19a) eingreift; sowie ein zweites Feststellelement (11a), das an der zweiten Grundplatte (1a) angebracht ist und Winkelbewegung mit dem vierten Verbindungshebel (18a) ausführt; **dadurch gekennzeichnet,** daß das erste und das zweite Loch (19, 19a) in radialer Richtung verlängert sind, und der zweite Bolzen (20a) und das zweite Loch (19a) so zusammenwirken, daß sich der zweite Bolzen (20a) in dem zweiten Loch (19a) in einer Umfangsrichtung in bezug auf die Drehung des dritten Verbindungshebels (17a) mit der Drehstange (16) bewegen kann; und dadurch, daß die Hebellängen des ersten (18) und des zweiten (17) Hebels zu dem ersten Bolzen (20) und die Hebellängen des dritten (17a) und des vierten (18a) Hebels zu dem zweiten Bolzen (20a) so sind, daß, wenn sich der zweite Bolzen (20a) nicht in Umfangsrichtung in dem zweiten Loch (19a) bewegt, Drehung der Drehstange (16) über einen Winkel bewirkt, daß sich das zweite Feststellelement (11a) über einen größeren Winkel bewegt als das erste Feststellelement (11).

2. Kraftfahrzeugsitz nach Anspruch 1, wobei der dritte Verbindungshebel (17a) an der Seite der zweiten Grundplatte (1a) angeordnet ist, die sich näher an der ersten Grundplatte (1) befindet, und der vierte Verbindungshebel (18a) an der gegenüberliegenden Seite der zweiten Grundplatte (1a) angeordnet ist, und wobei die zweite Grundplatte (1a) mit einem bogenförmigen Schlitz (22) versehen ist, durch den sich der zweite Bolzen (20a) erstreckt.

## Revendications

1. Dispositif d'inclinaison à double verrouillage pour siège d'automobile comprenant : une première plaque de base (1) ; une deuxième plaque de base (1a) agencée suivant une relation espacée à ladite première plaque de base (1) ; une tige rotative (16) interconnectant lesdites première et deuxième plaques de base (1, 1a), ladite tige rotative (16) ayant une portion d'extrémité adjacente à ladite première plaque de base (1) et la portion d'extrémité opposée adjacente à ladite deuxième plaque de base (1a) ; un premier levier articulé (18) monté de façon pivotante sur ladite première plaque de base (1) et ayant une portion d'extrémité présentant un premier axe (20) et une portion d'extrémité opposée ; un deuxième levier articulé (17) ayant une extrémité reliée fixement à ladite tige rotative (16) à ladite une portion d'extrémité de celle-ci pour une rotation avec celle-ci, ledit deuxième levier articulé (17) ayant la portion d'extrémité opposée présentant un premier trou (19) dans lequel est mis en prise ledit premier axe (20) dudit premier levier articulé (18) ; un levier de relâchement manuel (12) monté de façon pivotante sur ladite première plaque de base et mis en prise avec ladite portion d'extrémité opposée dudit premier levier articulé (18) ; un premier élément de verrouillage (11) coopérant avec ledit levier de relâchement manuel (12) en vue d'un mouvement angulaire avec ledit levier de relâchement manuel (12) ; un troisième levier articulé (17a) ayant une extrémité reliée fixement à ladite portion d'extrémité opposée de ladite tige rotative (16) pour une rotation avec celle-ci, ledit troisième levier articulé (17a) présentant à sa portion d'extrémité opposée un deuxième trou (19a) ; un quatrième levier articulé (18a) ayant une portion d'extrémité montée de façon pivotante sur ladite deuxième plaque de base et la portion d'extrémité opposée présentant un deuxième axe (20a) mis en prise dans ledit deuxième trou (19a) ; et un deuxième élément de verrouillage (11a) monté sur ladite deuxième plaque de base (1a) en vue d'un mouvement angulaire avec ledit quatrième levier articulé (18a) ; caractérisé en ce que lesdits premier et deuxième trous (19, 19a) sont oblongs dans une direction radiale, et ledit deuxième axe (20a) et ledit deuxième trou (19a) coopèrent l'un avec l'autre de telle sorte que ledit deuxième axe (20a) peut se déplacer à l'intérieur dudit deuxième trou (19a) dans une direction circonférentielle relativement à la rotation dudit troisième levier articulé (17a) avec ladite tige rotative (16) ; et en ce que les longueurs de levier desdits premier (18) et deuxième (17) leviers vers ledit premier axe (20) et les longueurs de levier desdits troisième (17a) et quatrième (18a) leviers vers ledit deuxième axe (20a) sont telles que, lorsque le deuxième axe (20a) ne se déplace pas circonférentiellement à l'intérieur du deuxième trou (19a), la rotation de ladite tige rotative (16) suivant un angle amène le deuxième élément de verrouillage (11a) à se déplacer angulairement plus que ne le fait le premier élément de verrouillage (11).

2. Siège d'automobile selon la revendication 1, dans lequel ledit troisième levier articulé (17a) est disposé sur ce côté de ladite deuxième plaque de base (1a) qui est disposé plus près de la première plaque de base (1) et ledit quatrième levier articulé (18a) est disposé sur le côté opposé de ladite deuxième plaque de base (1a), et dans lequel ladite deuxième plaque de base (1a) présente une fente arquée (22) à travers laquelle s'étend ledit deuxième axe (20a).
